# FASCICULE DE BREVET EUROPEEN

(11) **EP 3 744 471 B1**
(45) Date de publication et mention de la délivrance du brevet: **07.06.2023**
(21) Numéro de dépôt: 20174042.0
(22) Date de dépôt: 12.05.2020
(51) Int. Cl.: B23P 19/00, B65G 47/14

(54) **DISPOSITIF DE DISTRIBUTION DE COMPOSANTS DE TYPE AGRAFE**
VORRICHTUNG ZUR VERTEILUNG VON KLAMMERELEMENTEN
DEVICE FOR DISPENSING CLIP-TYPE COMPONENTS

(30) Priorité: 29.05.2019 FR 1905772
(43) Date de publication de la demande: 02.12.2020
(73) Titulaire: NOVARES France, 92140 Clamart (FR)
(72) Inventeur: ADIBA, Laurent, 21220 VALFORET (FR)
(74) Mandataire: Germain Maureau

(56) Documents cités:
- WO-A1-2010/089290
- FR-A1- 2 946 035
- FR-A1- 3 058 082

## Description

La présente invention concerne un dispositif de distribution de composants de type agrafe plastique ou métallique destinés notamment à l'assemblage de pièces. De tels composants sont destinés à être mis en place par encliquetage sur des pièces qui, ultérieurement, seront agrafées sur des supports. Généralement, ces agrafes comprennent une tête configurée pour être encliquetée sur la pièce, et un pied configuré pour être encliqueté sur le support. Par exemple, de telles agrafes peuvent servir lors du montage de pièces plastique à l'intérieur ou à l'extérieur d'un véhicule automobile.

Actuellement, les dispositifs de distributions d'agrafes comprennent généralement un bol vibrant dans lequel les agrafes sont stockées en vrac et des rails de guidage destinés à acheminer les agrafes depuis le bol vibrant vers les postes de travail d'une chaîne de montage. Ces dispositifs de distribution connus présentent toutefois l'inconvénient d'être complexes à mettre en oeuvre. De plus, des problèmes de blocage surviennent fréquemment dans le bol vibrant et les rails de guidage du fait du mauvais positionnement des agrafes. Ces blocages génèrent donc des arrêts de production qui limitent fortement les cadences d'alimentation des agrafes.

Par ailleurs, il est également connu un dispositif de distribution qui est basé sur l'utilisation d'une table vibrante sur laquelle des composants de type agrafe sont déversés et, qui, du fait de la vibration de la table, se positionnent selon une position stable prédéterminée. Un dispositif optique, de type caméra, disposé à l'aplomb de la table permet de détecter les composants bien positionnés. Cette information est ensuite transmise à une unité de commande qui contrôle le déplacement du bras de saisie du robot de manière à prélever uniquement les composants bien positionnés et les transférer ensuite vers une zone de traitement aval. Ce dispositif présente toutefois l'inconvénient de n'être pas adapté à des composants tridimensionnels dont la forme extérieure ne permet pas d'atteindre une position stable sur la table en vibration. En particulier, dans le cas d'agrafes présentant un pied en forme d'obus et une tête en forme de disque, il est quasiment impossible de maintenir l'agrafe en équilibre stable sur la table lorsque celle-ci vibre. Ce dispositif ne fonctionne donc de manière efficace que pour des agrafes possédant une forme bien spécifique. En particulier, pour conserver une position d'équilibre stable, les agrafes doivent présenter une tête bien plate et un diamètre important de cette tête pour éviter leur basculement lors de la vibration de la table.

D'autres dispositifs de distribution ont également été décrits dans les documents WO 2010/089290, qui divulgue le préambule de la revendication 1, et FR 3 058 082. Ces dispositifs de distribution présentent toutefois les mêmes inconvénients que les solutions décrites précédemment.

Dans ce contexte technique, un but de l'invention est de proposer un dispositif de distribution de composants de type agrafe ne présentant pas les inconvénients de l'art antérieur susmentionné.

A cet effet, l'invention concerne un dispositif de distribution de composants de type agrafe destinés notamment à l'assemblage de pièces, comprenant:
- un magasin principal de stockage en vrac desdits composants,
- un plateau de stockage provisoire de composants extraits du magasin principal configuré pour stocker provisoirement les composants en attente d'être transférés hors du dispositif, ledit plateau étant monté en translation alternative selon au moins une direction longitudinale de manière à pouvoir agiter lesdits composants stockés provisoirement et favoriser leur positionnement à l'intérieur dudit plateau selon au moins une position stable prédéterminée liée à leur forme,
- un système de détection optique configuré pour détecter, parmi les composants stockés provisoirement à l'intérieur du plateau de stockage provisoire, ceux présentant ladite position stable prédéterminée,
- un système de transfert configuré pour transférer, individuellement ou en groupe, les composants présentant ladite position stable prédéterminée vers une zone de traitement aval située hors du dispositif,
- une unité de commande électronique en liaison électronique avec le système de détection optique et le système de transfert, ladite unité étant configurée pour contrôler le système de transfert notamment en fonction de signaux de détection reçus de la part du système de détection optique,
caractérisé par le fait que le plateau de stockage provisoire est muni d'une série de logements individuels, chacun desdits logements étant configuré pour recevoir un unique composant selon ladite position stable prédéterminée.

Ainsi configurée, l'invention permet de favoriser le positionnement stable des composants au niveau du plateau de stockage provisoire du fait de la présence de logements individuels dans lesquels pourront être logés les composants dans une position stable d'équilibre, limitant ainsi fortement le risque d'un basculement ultérieur des composants dans une position instable du fait de l'agitation induite par le plateau. Une fois dans leur position stable d'équilibre, les composants pourront être facilement prélevés par le système de transfert et transférer ensuite vers une zone de traitement aval.

Le dispositif de l'invention pourra comprendre une ou plusieurs des caractéristiques suivantes, prises isolément ou de manière combinée :
- chacun des logements individuels forme une ouverture traversante à l'intérieur du plateau de stockage provisoire, ladite ouverture étant configurée pour permettre le passage d'une première partie des composants et empêcher le passage d'une deuxième partie des composants.
- la géométrie de l'ouverture est adaptée à celle du composant considéré.
- chaque ouverture traversante possède une section de forme circulaire, la géométrie de cette ouverture étant adaptée à celle du composant considéré.
- les logements individuels sont distribués sur le plateau de stockage provisoire selon la géométrie du composant.
- les logements individuels sont régulièrement espacés sur le plateau de stockage provisoire.
- les logements individuels sont répartis sur le plateau de stockage provisoire selon un alignement régulier de rangées et de colonnes.- le système de détection optique comprend une caméra optique orientée de manière à visionner le plateau de stockage provisoire par le dessus et un logiciel de traitement d'image apte à recevoir et à analyser les images prises par la caméra optique de manière à détecter les composants stockés sur le plateau de stockage provisoire présentant la position stable prédéterminée.
- le système de transfert consiste en un robot à bras articulé et possédant au moins un doigt de saisie configuré pour saisir individuellement les composants stockés sur le plateau de stockage provisoire présentant la position stable prédéterminée.

L'invention sera davantage comprise à la lecture de la description non limitative qui va suivre, faite en référence aux figures ci-annexées.
- la figure 1 est une vue schématique d'un dispositif de distribution de composants selon l'invention.
- la figure 1a est une vue en perspective d'une variante possible de plateau de stockage provisoire utilisable dans le dispositif représenté sur la figure 1.
- la figure 2 est une vue en perspective d'une autre variante possible de plateau de stockage provisoire utilisable dans le dispositif représenté sur la figure 1.
- la figure 3 est une vue de dessus du plateau représenté sur la figure 2, dans lequel un certain nombre de composants ont été stockés.
- la figure 4 est une vue en perspective d'une agrafe destinée à alimenter le dispositif de l'invention.

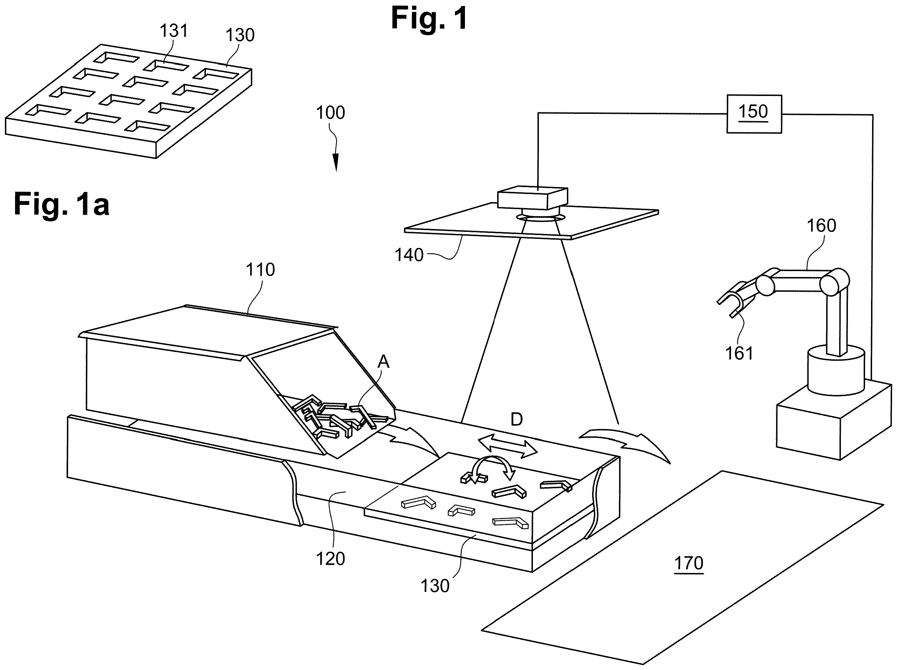

En référence à la figure 1, il est représenté un dispositif de distribution 1 selon une première configuration de l'invention. Ce dispositif 1 comprend notamment un magasin principal 110 permettant de recevoir en vrac des composants A présentant des formes diverses. Une table de convoyage 120 disposée sous le magasin principal 110 et supportant un plateau de stockage provisoire 130 peut se déplacer selon une direction longitudinale D de manière à éloigner ou rapprocher le plateau 130 du magasin principal 110. Ainsi, après avoir positionné correctement le plateau 130 sous le magasin 110, il est possible de déverser un certain nombre de composants A contenus dans le magasin principal 110 sur le plateau 130. Les composants A sont alors disposés de manière aléatoire à la surface du plateau 130, que ce soit au niveau de leur positionnement dans le plan défini par le plateau 130, mais également au niveau de leur orientation dans l'espace.

Afin de permettre aux composants A d'adopter la position la plus stable possible sur la plateau 130, c'est-à-dire la position dans laquelle ils possèdent une énergie potentielle la plus basse possible, correspondant généralement à la position dans laquelle leur centre de masse est à son point le plus bas, le plateau 130 est ensuite déplacé selon une série de mouvements alternatifs d'avant en arrière, parallèlement à la direction D, ou transversalement ou encore selon un axe Z autour d'une position médiane. Ces mouvements alternatifs provoquent une agitation des composants A qui modifient leur orientation et leur positionnement sur le plateau 130. Ainsi, comme illustré sur la figure 1, dans le cas de composants A en forme de L, certains des composants A pourront par exemple basculer d'une position instable, dans laquelle ils sont debout sur le plateau 130, à une position stable, dans laquelle ils sont couchés sur le plateau 130. Le dispositif 100 favorise encore ce passage d'une position instable à une position stable en munissant le plateau 130 d'une série de logements individuels 131, tel que représenté sur la figure 1a. Chacun des logements 131 est configuré pour contenir au moins partiellement un unique composant A. Ainsi, dans l'exemple spécifique représenté, chacun des logements 131 forme une cavité à la surface supérieure du plateau 130, lesdites cavités possédant une forme en L sensiblement complémentaire de celle des composants A. Les logements 131 sont répartis de manière régulièrement espacée à la surface du plateau et possèdent avantageusement une répartition en rangée et en colonne. Ainsi configuré, le plateau de stockage provisoire 130 permettra de recevoir dans les logements 131 les composants A qui auront, du fait de l'agitation du plateau, été déplacés de manière à se retrouver en position couchée et correctement positionnés pour être réceptionnés à l'intérieur des logements 131. Les composants A ainsi disposés dans les logements 131 conserveront une position fixe par rapport au plateau 130. Un dispositif de détection optique 140, de type caméra par exemple, positionné au-dessus du plateau 130 permettra de visionner l'ensemble du plateau 130 et le signal de sortie délivré par ledit dispositif de détection optique 140 pourra être analysé par un logiciel de traitement numérique de manière à détecter les composants A possédant une position prédéterminée. Ainsi, dans l'exemple représenté sur la figure 1, le dispositif de détection optique 140 pourra détecter à tout instant les composants A qui sont positionnés à l'intérieur des logements 131. Une fois cette détection effectuée, le dispositif de détection optique 140 transmet l'information correspondante à une unité de commande 150 qui est en communication électronique avec un appareil de transfert 160, de type robot par exemple, de manière à lui indiquer qu'il peut prélever individuellement, grâce à un moyen de saisie tel que doigt de saisie 161, par exemple, ou encore une pince, ou de manière groupée les composants A possédant la position prédéterminée. L'appareil de transfert 160 est chargé ensuite du transfert desdits composants A vers une zone de traitement aval 170 situé en dehors du dispositif de distribution 100.

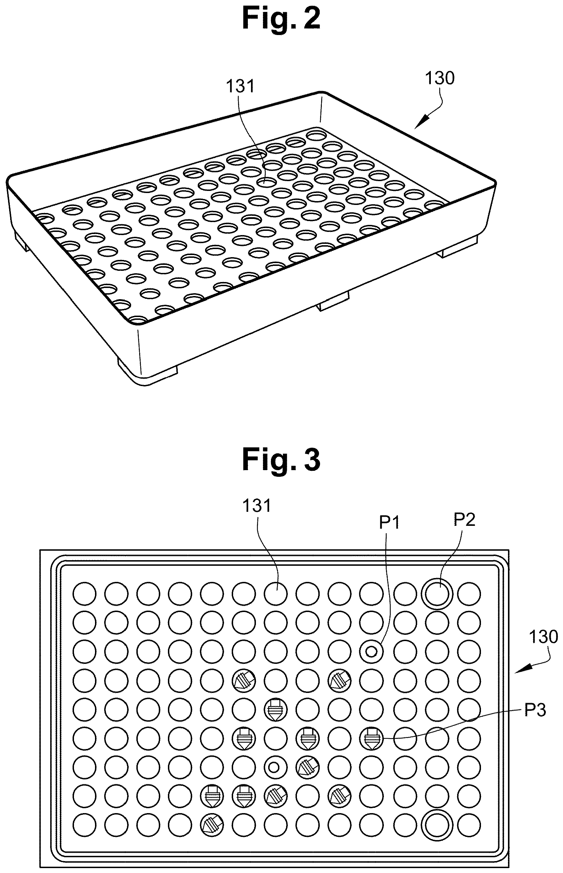

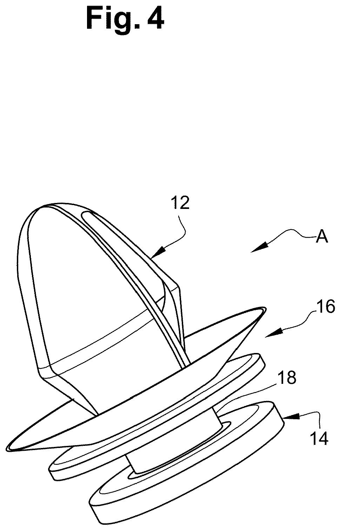

Dans la variante représentée sur la figure 2, le plateau de stockage provisoire 130 est muni d'une série d'ouvertures traversantes 131 de forme circulaire, les ouvertures 131 étant réparties selon un alignement de rangées et de colonnes. Chaque ouverture 131 est apte à contenir une agrafe A présentant des caractéristiques semblables à celle représentée sur la figure 4, à savoir une forme en deux parties séparées par une collerette 16 centrale circulaire. Une première partie 12, en forme d'obus, correspond au pied de l'agrafe A et est destinée à être introduite dans une tôle métallique d'un châssis de véhicule. Une deuxième partie 14, en forme de disque, correspond à la tête de l'agrafe A et est destinée à être introduite dans une pièce plastique recouvrant le châssis. La collerette 16 est séparée de la tête 14 par une gorge 18. La gorge 18 sera dimensionnée de manière à permettre l'engagement de la pièce plastique destinée à être fixée sur le châssis. Chaque ouverture 131 possède ainsi un diamètre configuré pour permettre l'introduction du pied et/ou de la tête des agrafes A mais pour empêcher le passage de la collerette 16.

De cette façon, et comme illustré sur la figure 3, les agrafes A pourront adopter, durant l'agitation du plateau 130, plusieurs positions possibles. Une première position P1 correspondra à une première position stable préférentielle pour l'agrafe A. Dans cette position préférentielle, l'agrafe A est positionnée de telle sorte que son pied 12 est disposé complètement à l'intérieur du plateau 130, l'agrafe A reposant sur la surface supérieure du plateau 130 au niveau de sa collerette 16. La tête 14 de l'agrafe A dépasse du plateau 130 et peut être facilement saisie par le doigt de saisie 161 du robot 160. Une deuxième position P2 correspondra à une deuxième position stable préférentielle pour l'agrafe A. Dans cette position préférentielle, l'agrafe A est positionnée de telle sorte que sa tête 14 est disposée complètement à l'intérieur du plateau 130, l'agrafe A reposant sur la surface supérieure du plateau 130 au niveau de sa collerette 16. Le pied 12 de l'agrafe A dépasse du plateau 130 et peut être facilement saisi par le doigt de saisie 161 du robot 160. Une troisième position P3 correspondra à une position instable pour l'agrafe A. Dans cette position instable, l'agrafe A est positionnée de telle sorte que sa collerette 16 est partiellement engagée à l'intérieur d'une ouverture 131 par la tranche, l'agrafe A reposant sur la surface supérieure du plateau 130 au niveau de son pied 12 et/ou de sa tête 14. Dans cette position, l'agrafe A ne peut pas être facilement saisie par le doigt de saisie 161 du robot 160. De manière à permettre le passage de l'agrafe A de la position instable P3 à l'une des positions stables P1 ou P2, il sera nécessaire de poursuivre, voire d'intensifier, l'agitation du plateau 130.

## Revendications

1. Dispositif (100) de distribution de composants (A) de type agrafe destinés notamment à l'assemblage de pièces, comprenant :
- un magasin principal (110) de stockage en vrac desdits composants,
- un plateau (130) de stockage provisoire de composants (A) extraits du magasin principal (110) configuré pour stocker provisoirement les composants (A) en attente d'être transférés hors du dispositif (100), ledit plateau (130) étant monté en translation alternative selon au moins une direction longitudinale (D) de manière à pouvoir agiter lesdits composants (A) stockés provisoirement et favoriser leur positionnement à l'intérieur dudit plateau (130) selon au moins une position stable prédéterminée (P1, P2) liée à leur forme,
- un système de détection optique (140) configuré pour détecter, parmi les composants (A) stockés provisoirement à l'intérieur du plateau (130) de stockage provisoire, ceux présentant ladite position stable prédéterminée (P1, P2),
- un système de transfert (160) configuré pour transférer, individuellement ou en groupe, les composants (A) présentant ladite position stable prédéterminée (P1, P2) vers une zone de traitement aval (170) située hors du dispositif (100),
- une unité de commande électronique (150) en liaison électronique avec le système de détection optique (140) et le système de transfert (160), ladite unité (150) étant configurée pour contrôler le système de transfert (160) notamment en fonction de signaux de détection reçus de la part du système de détection optique (140),
**caractérisé en ce que** le plateau (130) de stockage provisoire est muni d'une série de logements (131) individuels, chacun desdits logements (131) étant configuré pour recevoir un unique composant (A) selon ladite position stable prédéterminée (P1, P2).

2. Dispositif (100) selon la revendication 1, **caractérisé en ce que** chacun des logements individuels forme une ouverture traversante (131) à l'intérieur du plateau (130) de stockage provisoire, ladite ouverture (131) étant configurée pour permettre le passage d'une première partie (12, 14) des composants (A) et empêcher le passage d'une deuxième partie (16) des composants (A).

3. Dispositif (100) selon la revendication 2, **caractérisé en ce que** la géométrie de l'ouverture (131) est adaptée à celle du composant (A).

4. Dispositif (100) selon la revendication 3, **caractérisé en ce que** chaque ouverture traversante (131) possède une section de forme circulaire.

5. Dispositif (100) selon l'une des revendication précédentes, **caractérisé en ce que** les logements (131) individuels sont distribués sur le plateau (130) de stockage provisoire selon la géométrie du composant (A).

6. Dispositif (100) selon la revendication 5, **caractérisé en ce que** les logements (131) individuels sont régulièrement espacés sur le plateau (130) de stockage provisoire.

7. Dispositif (100) selon la revendication 6, **caractérisé en ce que** les logements (131) individuels sont répartis sur le plateau (130) de stockage provisoire selon un alignement régulier de rangées et de colonnes.

8. Dispositif (100) selon l'une des revendications précédentes, **caractérisé en ce que** le système de détection optique (140) comprend une caméra optique orientée de manière à visionner le plateau (130) de stockage provisoire par le dessus et un logiciel de traitement d'image apte à recevoir et à analyser les images prises par la caméra optique de manière à détecter les composants (A) stockés sur le plateau (130) de stockage provisoire présentant la position stable prédéterminée (P1, P2).

9. Dispositif (100) selon l'une des revendications précédentes, **caractérisé en ce que** le système de transfert (160) consiste en un robot à bras articulé et possédant au moins un doigt de saisie (161) configuré pour saisir individuellement les composants (A) stockés sur le plateau (130) de stockage provisoire présentant la position stable prédéterminée (P1, P2).

## Patentansprüche

1. Vorrichtung (100) zum Verteilen von Klammerelementen (A), die insbesondere zum Verbinden von Werkstücken bestimmt sind, umfassend:
- ein Hauptlager (110) zur losen Aufbewahrung der Elemente,
- ein Tablett (130) zur vorübergehenden Aufbewahrung von aus dem Hauptlager (110) entnommenen Elementen (A), das dafür ausgelegt ist, die Elemente (A), die darauf warten, aus der Vorrichtung (100) heraustransferiert zu werden, vorübergehend aufzubewahren, wobei das Tablett (130) in mindestens einer Längsrichtung (D) hin und her verschiebbar angebracht ist, um die vorübergehend aufbewahrten Elemente (A) schütteln zu können und ihre Positionierung im Inneren des Tabletts (130) gemäß mindestens einer mit ihrer Form zusammenhängenden vorbestimmten stabilen Position (P1, P2) zu begünstigen,
- ein optisches Erkennungssystem (140), das dafür ausgelegt ist, unter den Elementen (A), die vorübergehend im Inneren des Tabletts (130) zur vorübergehenden Aufbewahrung aufbewahrt werden, jene zu erkennen, die die vorbestimmte stabile Position (P1, P2) aufweisen,
- ein Transfersystem (160), das dafür ausgelegt ist, die Elemente (A), die die vorbestimmte stabile Position (P1, P2) aufweisen, einzeln oder als Gruppe zu einer nachgelagerten Verarbeitungszone (170), die sich außerhalb der Vorrichtung (100) befindet, zu transferieren,
- eine elektronische Steuereinheit (150) in elektronischer Verbindung mit dem optischen Erkennungssystem (140) und dem Transfersystem (160), wobei die Einheit (150) dafür ausgelegt ist, das Transfersystem (160) insbesondere in Abhängigkeit von Erkennungssignalen, die von Seiten des optischen Erkennungssystems (140) empfangen werden, zu steuern,
**dadurch gekennzeichnet, dass** das Tablett (130) zur vorübergehenden Aufbewahrung mit einer Serie von Einzelaufnahmen (131) ausgestattet ist, wobei jede der Aufnahmen (131) dafür ausgelegt ist, ein einziges Element (A) gemäß der vorbestimmten stabilen Position (P1, P2) aufzunehmen.

2. Vorrichtung (100) nach Anspruch 1, **dadurch gekennzeichnet, dass** jede der Einzelaufnahmen eine Durchgangsöffnung (131) im Inneren des Tabletts (130) zur vorübergehenden Aufbewahrung bildet, wobei die Öffnung (131) dafür ausgelegt ist, den Durchtritt eines ersten Teils (12, 14) der Elemente (A) zu gestatten und den Durchtritt eines zweiten Teils (16) der Elemente (A) zu verhindern.

3. Vorrichtung (100) nach Anspruch 2, **dadurch gekennzeichnet, dass** die Geometrie der Öffnung (131) auf die des Elements (A) abgestimmt ist.

4. Vorrichtung (100) nach Anspruch 3, **dadurch gekennzeichnet, dass** jede Durchgangsöffnung (131) einen kreisförmigen Querschnitt besitzt.

5. Vorrichtung (100) nach einem der vorstehenden Ansprüche, **dadurch gekennzeichnet, dass** die Einzelaufnahmen (131) am Tablett (130) zur vorübergehenden Aufbewahrung gemäß der Geometrie des Elements (A) verteilt sind.

6. Vorrichtung (100) nach Anspruch 5, **dadurch gekennzeichnet, dass** die Einzelaufnahmen (131) am Tablett (130) zur vorübergehenden Aufbewahrung regelmäßig beabstandet sind.

7. Vorrichtung (100) nach Anspruch 6, **dadurch gekennzeichnet, dass** die Einzelaufnahmen (131) am Tablett (130) zur vorübergehenden Aufbewahrung gemäß einer regelmäßigen Ausrichtung von Reihen und Spalten verteilt sind.

8. Vorrichtung (100) nach einem der vorstehenden Ansprüche, **dadurch gekennzeichnet, dass** das optische Erkennungssystem (140) eine optische Kamera, die so ausgerichtet ist, dass sie das Tablett (130) zur vorübergehenden Aufbewahrung von oben sieht, und eine Bildverarbeitungssoftware umfasst, die in der Lage ist, die von der optischen Kamera aufgenommenen Bilder zu empfangen und zu analysieren, um die auf dem Tablett (130) zur vorübergehenden Aufbewahrung aufbewahrten Elemente (A), die die vorbestimmte stabile Position (P1, P2) aufweisen, zu erkennen.

9. Vorrichtung (100) nach einem der vorstehenden Ansprüche, **dadurch gekennzeichnet, dass** das Transfersystem (160) aus einem Gelenkarmroboter besteht und mindestens einen Greiffinger (161) besitzt, der dafür ausgelegt ist, die auf dem Tablett (130) zur vorübergehenden Aufbewahrung aufbewahrten Elemente (A), die die vorbestimmte stabile Position (P1, P2) aufweisen, einzeln zu greifen.

## Claims

1. A device (100) for dispensing clip-type components (A) intended in particular for part assembly, comprising:
- a main store (110) for bulk storage of said components,
- a tray (130) for temporary storage of components (A) extracted from the main store (110) configured to temporarily store the components (A) waiting to be transferred out of the device (100), said tray (130) being mounted in reciprocating translation according to at least one longitudinal direction (D) so as to be able to agitate said temporarily stored components (A) and promote positioning thereof inside said tray (130) according to at least one predetermined stable position (P1, P2) related to their shape,
- an optical detection system (140) configured to detect, among the components (A) temporarily stored inside the temporary storage tray (130), those having said predetermined stable position (P1, P2),
- a transfer system (160) configured to transfer, individually or in groups, the components (A) having said predetermined stable position (P1, P2) to a downstream processing area (170) located outside the device (100),
- an electronic control unit (150) in electronic connection with the optical detection system (140) and the transfer system (160), said unit (150) being configured to control the transfer system (160) in particular as a function of detection signals received from the optical detection system (140),
**characterized in that** the temporary storage tray (130) is provided with a series of individual housings (131), each of said housings (131) being configured to receive one single component (A) according to said predetermined stable position (P1, P2).

2. The device (100) according to claim 1, **characterized in that** each of the individual housings forms a through opening (131) inside the temporary storage tray (130), said opening (131) being configured to allow the passage of a first portion (12, 14) of the components (A) and prevent the passage of a second portion (16) of the components (A).

3. The device (100) according to claim 2, **characterized in that** the geometry of the opening (131) is adapted to that of the component (A).

4. The device (100) according to claim 3, **characterized in that** each through opening (131) has a circular-shaped section.

5. The device (100) according to any of the preceding claims, **characterized in that** the individual housings (131) are distributed over the temporary storage tray (130) according to the geometry of the component (A).

6. The device (100) according to claim 5, **characterized in that** the individual housings (131) are regularly spaced over the temporary storage tray (130).

7. The device (100) according to claim 6, **characterized in that** the individual housings (131) are spread out over the temporary storage tray (130) according to a regular alignment of rows and columns.

8. The device (100) according to any of the preceding claims, **characterized in that** the optical detection system (140) comprises an optical camera oriented so as to view the temporary storage tray (130) from above and an image processing software adapted to receive and analyze the images captured by the optical camera so as to detect the components (A) stored on the temporary storage tray (130) having the predetermined stable position (P1, P2).

9. The device (100) according to any of the preceding claims, **characterized in that** the transfer system (160) consists of a robot with an articulated arm and having at least one gripping finger (161) configured to individually grip the components (A) stored on the temporary storage tray (130) having the predetermined stable position (P1, P2).
